# EUROPEAN PATENT APPLICATION

(11) **EP 4 600 199 A1**
(43) Date of publication of application: **13.08.2025**
(21) Application number: 25156202.1
(22) Date of filing: 06.02.2025
(51) Int. Cl.: B66F 9/075

(54) **INDUSTRIAL CARRIAGE**

(30) Priority: 06.02.2024 IT 202400002479
(71) Applicant: Toyota Material Handling Manufacturing Italy S.p.A, 40132 Bologna (IT)
(72) Inventor: FOLIGNO, Andrea, 40133 Bologna (IT)
(74) Representative: Casadei, Barbara

(57) **Abstract**

Described is an industrial carriage, preferably of the electric type, comprising a frame (2) having side panels (21) and at least one energy storage system (3), configured for powering at least one user device (4) of the industrial carriage (1), wherein the energy storage unit (31) or energy pack (31) is integrated in the frame (2) in such a way as to be inaccessible through the side panels (21) of the frame (2), the energy storage system (3) is subdivided into a plurality of operating units (31, 32, 33, 34, 35), including the energy storage unit (31), each or which has a relative functionality, different from each other, each operating unit (31, 32, 33, 34, 35) is positioned in a respective zone of the frame (2) which is separate from the zone of the frame (2) in which another operating unit (31, 32, 33, 34, 35) is positioned.

## Description

This invention relates to an industrial carriage.

The industrial carriages find widespread use in production chains, in warehouses, but also, for example, in ports, airports and interports. These carriages are generally used for lifting, moving and/or pulling loads of up to a few tens of tonnes in weight.

Amongst the various types of industrial carriages, electric tractor-trailers are becoming increasingly in demand and used, mainly for environmental reasons relating to emissions.

There are prior art solutions which comprise industrial carriages wherein the battery pack is integrated in the frame, that is to say, wherein the battery pack is installed incorporated directly in the frame of the carriage. The individual components of the battery pack can therefore be positioned in preferred areas of the frame already at the design stage.

However, these carriages have a high number of variant embodiments since depending on the various models of the carriage there are different architectures and arrangements of the batteries.

The need is felt in the sector of defining a design of the carriages which allows modularity between the various types of batteries, and, in particular, which allows the definition of preferred zones in which to install the batteries in an optimised manner also in various models of carriages.

The need is felt in the trade of simplifying the design and production of industrial carriages, in particular with regard to the integration of the battery pack in the frame of the carriages.

In this technical context, the Applicant felt the need to provide an industrial carriage comprising the technical features described according to independent claim 1.

Advantageously, this solution allows an industrial carriage to be made which meets the above-mentioned requirements, standardising the production and reducing the number of variant embodiments.

The features of the invention are clearly described in the claims below and its advantages are more apparent from the detailed description which follows, with reference to the accompanying drawings which illustrate a preferred, non-limiting example embodiment of the invention and in which:
- Figure 1 is a schematic view of an embodiment of a lift truck according to this invention with some parts removed to better illustrate others;
- Figure 2 shows a first variant of Figure 1;
- Figures 3 and 4 illustrate a schematic side view of further alternative embodiments of the industrial carriage according to the invention.

It should be noted that all the drawings are schematic and are therefore not representative of the actual dimensions.

With reference to the accompanying drawings, the numeral 1 denotes an industrial carriage according to the invention.

The industrial carriage 1, also referred to in this description simply as carriage 1, is used in production chains, in warehouses, but also, for example, in ports, airports and interports.

The carriage 1 is preferably a carriage of the electric type.

The carriage 1 is, for example, a tow truck or a lift truck.

According to this invention, the carriage 1 comprises a frame 2 having side walls 21.

The carriage 1 comprises at least one user device 4 and at least one energy storage system 3 configured for powering at least the user device 4.

The user device 4 is, for example, an electric motor.

The energy storage system 3 comprises at least one energy pack 31 defining an energy storage unit 31.

The energy pack 31 comprises a plurality of energy storage modules.

The energy storage unit 31 is integrated in the frame 2 in such a way as to be inaccessible through the side walls 21 of the frame 2.

This means that it is not possible to access inside the frame 2 through the side walls 21.

The side walls 21 are fixed, irremovable, relative to the frame 2.

In other words, the energy storage unit 31 is incorporated inside the frame 2 of the carriage 1.

The energy storage unit 31 is therefore incorporated inside the frame 2 in such a way as to be inaccessible through the side walls 21 and supplies power to at least the user device 4 of the carriage 1.

It should be noted, therefore, that the energy storage unit 31 is not easily accessible or removable by an average user, but specialised, qualified maintenance is required.

Preferably, the energy storage unit 31 comprises a plurality of electrochemical cells, in particular lithium ion electrochemical cells. According to this invention, the energy storage system 3 is divided into a plurality of operating units 31, 32, 33, 34, 35 including the energy storage unit 31.

Each operating unit 31, 32, 33, 34, 35 has its own functionality, distinct from the functionality of the other operating units 31, 32, 33, 34, 35.

Each operating unit 31, 32, 33, 34, 35 is positioned in a respective zone of the frame 2 which is separate from the zone of the frame 2 in which another operating unit 31, 32, 33, 34, 35 is positioned.

In other words, the operating units 31, 32, 33, 34, 35 are macrocomponents with a specific technical function distributed in respective distinct zones of the frame 2.

These respective zones are designed and prepared in an optimum manner for receiving the respective operating unit 31, 32, 33, 34, 35.

Advantageously, the energy storage system 3 divided into a plurality of operating units 31, 32, 33, 34, 35 makes it possible to group together the individual components of the energy storage system 3 on the basis of the specific functionality.

Advantageously, grouping together the individual components of the energy storage system 3 on the basis of the specific functionality simplifies the design, production and assembly.

Advantageously, the energy storage system 3 divided into operating units 31, 32, 33, 34, 35 on the basis of the specific functionality therefore makes it possible to optimise the organisation of the logic of the electronics of the carriage 1.

Advantageously, the fact of having operating units 31, 32, 33, 34, 35 positioned in respective zones of the frame 2 makes it possible to make the carriage 1, and in particular the frame 2, according to various architectures, designing the arrangement of the operating units 31, 32, 33, 34, 35 in an optimised fashion.

In other words, it is possible to make industrial carriages 1 in which the zones of the frame 2 in which the respective operating units 31, 32, 33, 34, 35 are positioned are different from each other and distributed in the space defined by the frame 2.

In particular, the positioning of the components is optimised by grouping them in the operating units 31, 32, 33, 34, 35 and consequently modulating the battery system.

Advantageously, it is possible to standardise and modulate the production of the operating units 31, 32, 33, 34, 35 in which the energy storage system 3 is divided.

In other words, the invention allows a standard, and modular, architecture to be obtained for the energy storage systems 3 also on different models of carriages 1.

Advantageously, the arrangement of standard operating units 31, 32, 33, 34, 35 in respective distinct zones of the frame 2 allows the constructional variants of the carriage 1 to be limited to those which have the optimum architecture for the specific use of the carriage 1.

Advantageously, this allows the production of carriages 1 to be standardised with a limited number of models.

It should be noted that carriages 1 comprising an energy storage system 3 divided into the operating units 31, 32, 33, 34, 35 makes it possible to reduce the certification tests necessary to qualify the carriage 1. In effect, once the certification tests have been performed on a predetermined variant embodiment of the carriage 1, all the carriages 1 which are equal to it do not require the repetition of these tests.

Reducing the tests for certification of the carriages 1 makes it possible to reduce the time for certification of the carriages 1. As a result, the development times are reduced.

According to a preferred embodiment, the plurality of operating units 31, 32, 33, 34, 35 comprises at least one power unit 32 and a unit 33 for controlling and controlling at least the energy storage unit 31.

A power unit 32 is electrically connected to the energy storage unit 31 at least to selectively determine the power supply of the user device 4 from the energy storage unit 31.

It should be noted that the power unit 32 is electrically connected to the user device 4.

In other words, the power unit 32 allows or prevents the passage of electric current from the energy storage unit 31 to the user device 4. Preferably, the power unit 32 comprises at least one or more components between sensors, fuses, remote control devices, switches, DC/DC converters, inverters.

The power unit 32 allows measurements to be performed, for example of current, by means of one or more sensors.

The power unit 32 makes it possible to convert the electric current for, if necessary, powering one or more operating units 31, 32, 33, 34, 35, by means, for example, of a converter.

It should be noted that these components all have a specific technical function which falls within the scope of allowing or preventing the passage of electric current, for example from the energy storage unit 31 to the user device 4, and/or performing measurements, for example of current, and/or converting the electric current, for example for supplying one or more operating units 31, 32, 33, 34, 35.

The unit 33 for controlling and managing the energy storage unit 31, electrically connected to the energy storage unit 31 and to the power unit 32.

The control and management unit 33 is preferably configured to monitor and manage the value of one or more parameters of the energy storage unit 31 between the voltage, current, temperature and residual charge. The control and management unit 33 is preferably configured to control the power unit 32 for selectively determining the power supply of the user device 4 from the energy storage unit 31. In other words, the control and management unit 33 controls, through the power unit 32, the opening and closing of the electrical connection between the energy storage unit 31 and the user device 4.

Advantageously, the control and management unit 33 guarantees the safety and efficiency of the storage system 3.

Preferably, the control and management unit 33 comprises at least one energy balancing unit.

Preferably, the control and management unit 33 comprises the logics for controlling and monitoring the energy storage system 3 and, in particular, the energy storage unit 31.

For example, therefore, without limiting the scope of the invention, the energy storage unit 31 comprises a plurality of electrochemical cells, in particular lithium ion electrochemical cells and the control and management unit 33 comprises a unit for the energy balancing of the electrochemical cells.

Advantageously, the energy balancing unit makes it possible to protect the energy storage system 3 by monitoring the status and the use.

According to an embodiment, the energy balancing unit is of the "BMS" type.

According to an embodiment, the power unit 32 and/or the control and management unit 33 are integrated in the frame 2 in such a way as to be inaccessible through the side panels 21 of the frame 2.

In other words, the power unit 32 and/or the control and management unit 33 are incorporated inside the frame 2 of the carriage 1.

The power unit 32 and/or the control and management unit 33 are therefore incorporated inside the frame 2 in such a way as to be inaccessible through the side walls 21.

It should be noted that, therefore, the power unit 32 and/or the control unit and management 33 are not easily accessible or removable by an average user, but specialised and qualified maintenance is required.

According to an aspect of the invention, the energy storage unit 31, the power unit 32 and the control and management unit 33 are positioned, respectively, in a first zone, in a second zone and in a third zone of the frame 2.

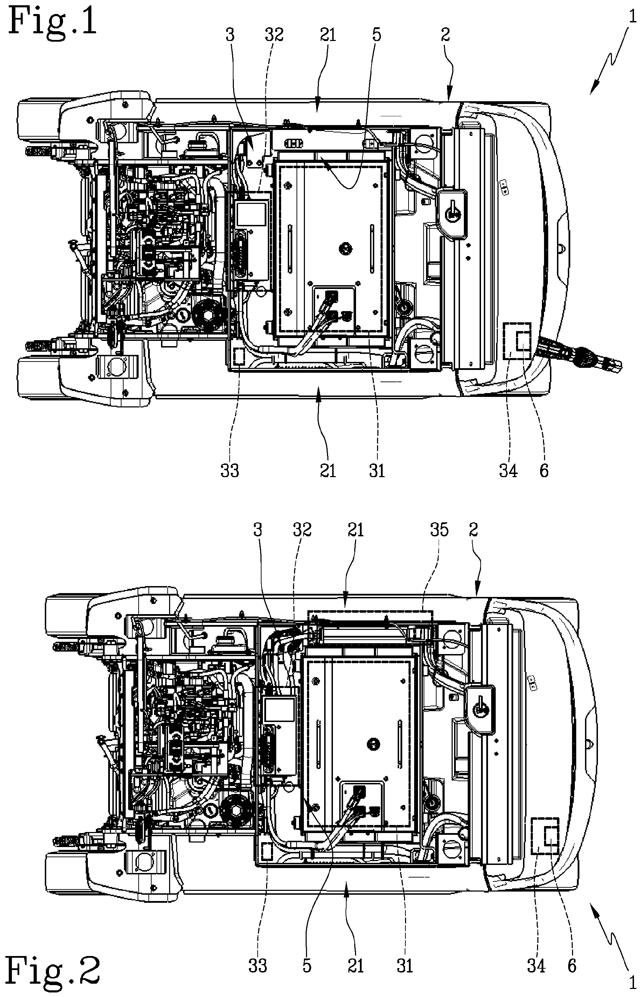

According to a preferred embodiment of Figure 1, the first and the second zone are adjacent to each other. In other words, the energy storage unit 31 and the power unit 32 are positioned in the frame close to one another. It should be noted that the third zone, for receiving the control and management unit 33, may be any zone of the carriage 1, even not close to the energy storage unit 31 and the power unit 32. In effect, the electrical connection between the control and management unit 33 and the energy storage unit 31 and the power unit 32 comprises signal cables, that is, lightweight and inexpensive cables and which, therefore, do not limit the position of the control and management unit 33.

The frame 2 has a compartment 5 for housing at least the energy storage unit 31 located in a central zone of the carriage 1 below the driver's cab 7. The power unit 32 is positioned adjacent to the energy storage unit 31 facing one of the sides of the energy pack 31.

The side of the energy pack 31 means a lateral side, or rear side, or front side or top side.

The third zone of the control and management unit 33 is positioned in a front zone of the carriage 1 adjacent to a side wall 21.

The plurality of operating units 32, 33, 34, 35 comprises a recharging unit 34 electrically connected to the energy storage unit 31 to manage the recharging of the energy storage modules.

The recharging unit 34 comprises a connector 6 for recharging the energy storage unit 31 accessible from the outside to recharge the energy storage unit 31 and at least one or more components between:
- a protective body for the recharging connector 6;
- an end of recharging light signaller;
- a presence sensor for connection of a power socket to the recharging connector 6;
- a sensor for detecting opening a door for protecting the recharging connector 6.

The recharging unit 34 is positioned in the frame 2 in a fourth zone of the frame 2.

The recharging unit 34 is positioned in a rear zone of the frame 2. Alternatively, the recharging unit 34 is positioned in an area of a side 21 of the carriage 1 or in any further area of the carriage 1 accessible from the outside for connecting the power socket.

According to this embodiment, the first zone, the second zone and the third zone are below the driver's cab 7.

According to the variant embodiment shown in Figure 2, the plurality of operating units 32, 33, 34, 35 comprises a unit 35 for transforming the alternating current into direct current, connected to the recharging unit 34 and to the energy storage unit 31.

The transformer unit 35 is located in a fifth zone of the frame 2.

The transformer unit 35 is positioned facing the energy storage unit 31.

In particular, it is located along a side 21 of the carriage 1, interposed between it and the energy storage unit 31.

According to this embodiment, the first zone, the second zone, the third zone and the fifth zone are below the driver's cab 7.

The recharging unit 34 is positioned in a rear zone of the frame 2. Alternatively, the recharging unit 34 is positioned in an area of a side 21 of the carriage 1 or in any further area of the carriage 1 accessible from the outside for connecting the power socket.

According to this embodiment, the first zone, the second zone and the third zone are below the driver's cab 7.

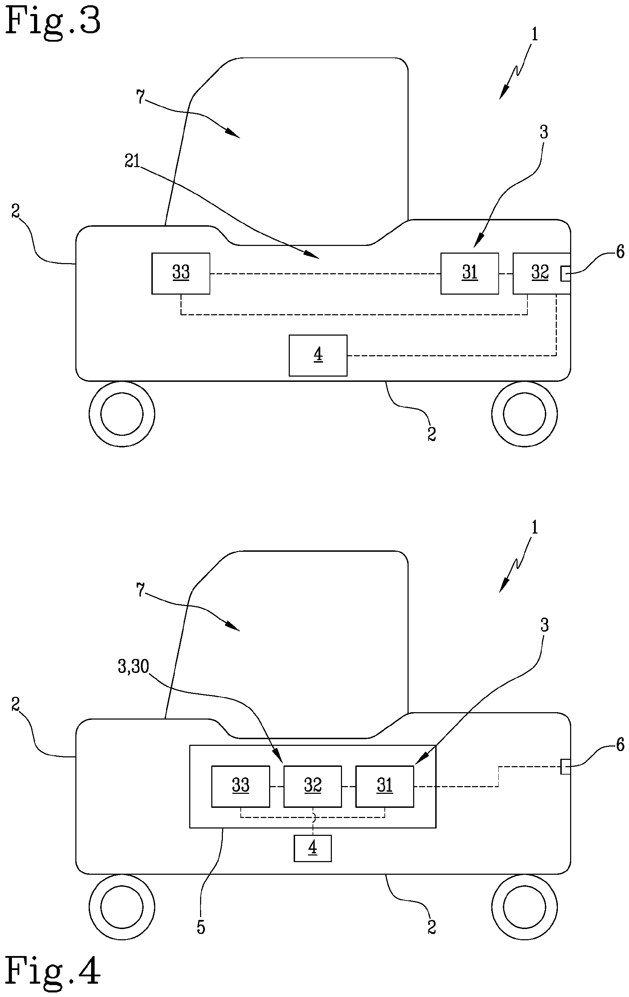

According to a further embodiment, shown in Figure 3, the first zone is positioned behind in the frame 2, that is to say, the energy storage unit 31 is positioned behind in the frame 2.

It should be noted that, considering the embodiment in which the first and the second zone are adjacent to each other, the power unit 32 is also positioned behind in the frame 2.

Advantageously, in particular in the case of lift trucks 1, the energy storage unit 31 positioned at the rear in the frame 2 allows it to act as a counterweight to the front lifting means, in particular in the condition of a loaded carriage 1.

According to an aspect of the invention, the third zone is positioned in front of the frame 2, that is to say, the control and management unit 33 is positioned in front of the frame 2.

According to a further embodiment, shown in Figure 4, the first zone, the second zone and the third zone are adjacent to each other. In other words, the operating units 31, 32, 33, 34, 35 for storing energy 31, power 32 and control and management 33 are positioned close to one another.

It should be noted that the arrangements described in this invention are preferred, but not exclusive since, in effect, the carriage 1 may comprise operating units 31, 32, 33, 34, 35 in respective different zones positioned in any zone of the frame 2.

According to an embodiment, the frame 2 has a compartment 5 for housing the energy storage system 3.

The first, second and third zones are inside the housing compartment 5.

In other words, the operating units 31, 32, 33, 34, 35 for storing energy 31, power 32 and control and management 33 are positioned inside the housing compartment 5.

It should be noted that this embodiment comprises the installation of all the operating units 31, 32, 33, 34, 35 inside the housing compartment 5, that is, in the same box.

Preferably, the carriage 1 comprises a connector 6 for recharging the energy storage unit 31.

The recharging connector 6 is accessible from the outside to recharge the energy storage unit 31.

More specifically, the recharging connector 6 is accessible through the frame 2 to allow a recharging of the battery.

Preferably, the recharging connector 6 is positioned in a rear zone of the frame 2.

Preferably, the recharging connector 6 is positioned close to the energy storage unit 31.

The recharging connector 6 allows the energy storage unit 31 to be connected to an external power supply source for recharging it. Preferably, the energy storage system 3 has a nominal voltage between the following values: 24V, 48V, 80V, 92V, 96V.

More specifically, the nominal voltage of a battery refers to the voltage value that the battery is designed to have under normal operating conditions and provides an indication of the typical voltage that the battery can supply or accept during operations.

Advantageously, the subdivision into operating units 31, 32, 33, 34, 35 makes it possible to organise the logic of the electronics for every possible category of batteries of the carriages 1. The expression "every possible category of batteries" means each possible nominal voltage value of the storage system 3.

According to an aspect of the invention, the carriage 1 comprises a driver's cab 7 connected above to the frame 2 in a removable fashion for allowing access from the outside to one or more operating units 31, 32, 33, 34, 35 of the energy storage system 3.

In other words, by removing the driver's cab 7 it is possible to access the zones of the frame 2 in which are positioned the respective operating units 31, 32, 33, 34, 35 and, in particular, it is possible to access the operating units.

Advantageously, this aspect allows access for extraordinary maintenance to the operating units 31, 32, 33, 34, 35 for energy storage 31, power 32 and control and management 33.

The removable driver's cab 7 allows, in particular, an to the operating units 31, 32, 33, 34, 35 from above.

## Claims

1. An industrial carriage, preferably electrical, comprising a frame (2) having side panels (21) and a driving position (7) connected above the frame (2) in a removable fashion for allowing access from the outside to the inside of the frame (2);
an energy storage system (3), housed in the frame (2), is configured for powering at least one user device (4) of the industrial carriage (1);
the industrial carriage (1) is **characterised in that**
the energy storage system (3) is divided into a plurality of operating units (31, 32, 33, 34, 35), each of which has a respective functionality, different from each other, including:
- an energy pack (31), having a plurality of energy storage modules, defining an energy storage unit (31),
- a power unit (32), electrically connected to the energy storage unit (31) at least to selectively determine the power supply of the user device (4) from the energy storage unit (31);
- a unit (33) for controlling and managing at least the energy storage unit (31), electrically connected to the energy storage unit (31) and to the power unit (32);
- a recharging unit (34) electrically connected to the energy storage unit (31) to manage the recharging of the energy storage modules;
the energy storage unit (31), the power unit (32), the control and management unit (33) and the recharging unit (34) are positioned in the frame (2) in a respective first zone, second zone, third zone and fourth zone of the frame (2) which are different from each other;
at least the energy storage unit (31) and the power unit (32) are integrated in the frame (2) in such a way as to be accessible by removing the driver's cab (7).

2. The carriage according to the preceding claim, **characterised in that** the power unit (32) comprises at least one or more components between sensors, fuses, remote control devices, switches, DC/DC converters, inverters.

3. The carriage according to claim 1 or 2, **characterised in that** the control and management unit (33) comprises at least one energy balancing unit.

4. The carriage according to any one of the preceding claims, **characterised in that** the energy storage unit (31) comprises a plurality of electrochemical cells.

5. The carriage according to any one of the preceding claims, **characterised in that** the recharging unit (34) comprises a connector (6) for recharging the energy storage unit (31) accessible from the outside for recharging the energy storage unit (31) and at least one or more components between:
- a protective body for recharging the connector (6);
- an end of recharging light signaller;
- a presence sensor for connection of a power socket to the recharging connector (6);
- a sensor for detecting opening a door for protecting the recharging connector (6).

6. The carriage according to any one of the preceding claims, **characterised in that** the frame (2) has a compartment (5) for housing at least the energy storage unit (31) located in a central zone of the carriage (1) below the driver's cab (7).

7. The carriage according to any one of the preceding claims, **characterised in that** the power unit (32) is positioned adjacent to the energy storage unit (31) facing one of the sides of the energy pack (31).

8. The carriage according to any one of the preceding claims, **characterised in that** the third zone in which the control and management unit (33) is positioned in a front zone of the carriage (1) adjacent to a side wall (21).

9. The carriage according to any one of the preceding claims, **characterised in that** the first zone, the second zone and the third zone are below the driver's cab (7) and accessible by removing the driver's cab (7).

10. The carriage according to any one of the preceding claims, **characterised in that** it comprises a unit (35) for transforming the alternating current into direct current, connected to the recharging unit (34) and to the energy storage unit (31); the transformation unit (35) is located in a fifth zone of the frame (2).

11. The carriage according to the preceding claim, **characterised in that** the transformer unit (35) is positioned facing the energy storage unit (31), in particular it is located along a side (21) of the carriage (1).

12. The carriage according to any one of the preceding claims, **characterised in that** the first zone, the second zone, the third zone and the fifth zone are below the driver's cab (7) and accessible by removing the driver's cab (7).

13. The carriage according to any one of the preceding claims, **characterised in that** the recharging unit (34) is positioned in a rear zone of the frame (2) or a side wall (21) or any zone of the carriage (1) accessible from the outside for connecting a power socket to the recharging connector (6).

14. The carriage according to any one of the preceding claims, **characterised in that** the frame (2) has a compartment (5) for housing the energy storage system (3), the first, the second and the third zones being inside the housing compartment (5).

15. The carriage according to any one of claims 1 to 13, **characterised in that** the first zone and the second zone are positioned behind in the frame (2) and the third zone is positioned in front in the frame (2); the power unit (32) comprises the recharging connector (6).

16. The carriage according to any one of the preceding claims, **characterised in that** the energy storage system (3) has a nominal voltage between the following values: 24V, 48V, 80V, 92V, 96V.
